# EUROPEAN PATENT APPLICATION

(11) **EP 1 271 523 A1**
(43) Date of publication of application: **02.01.2003**
(21) Application number: 01115226.1
(22) Date of filing: 22.06.2001
(51) Int. Cl.: G11B 27/32, G06F 17/30, H04N 5/765

(54) **Method and apparatus for simplifying the access of metadata**

(71) Applicant: DEUTSCHE THOMSON-BRANDT GMBH, 78048 Villingen-Schwenningen (DE)
(72) Inventor: Ostermann, Ralf, 30167 Hannover (DE); Blawat, Meinolf, 30161 Hannover (DE); Li, Hui, 30419 Hannover (DE); Winter, Marco, 30173 Hannover (DE)
(74) Representative: Thies, Stephan

(57) **Abstract**

Available storage media capacity for personal video recording increases continuously, metadata can be used to organize the recordings, search for content and access specific recordings. If metadata are embedded within the multimedia content itself, like DVB specific Service Information, which are multiplexed with the audio and video streams to form a MPEG-2 transport stream, a search based on this metadata would require an inefficient and time consuming search through all multimedia content stored. According to the invention metadata information is gathered, analyzed and processed to form metadata entities, which are amended by a reference to the content itself. A descriptor stream (DS) is formed from the resulting pairs of metadata entities and references to the content and is stored separately from the files comprising multimedia content. In this way, for data of an MPEG-2 transport stream the metadata can be accessed without a need to reparse the entire stream.

## Description

The invention relates to a method and to an apparatus for simplifying the access of metadata, which are associated with a file comprising multimedia data or a part of said file, especially for describing the content of said multimedia data and/or searching said file or file part among a plurality of files comprising multimedia data, wherein the metadata are originally multiplexed with said multimedia data.

### Background

Available storage media capacity for personal video recording increases continuously, approximately doubling every 2 years. Currently it is possible to store about 20 full-length movies on a single 100 GByte hard disk. In 2005, it will likely be possible to store about 80 movies on a single 400 GByte hard disk.

Similar figures apply to optical recording: currently about 5 GByte can be stored on a single layer single sided DVD disc but the DVR recorder as a successor of the today's DVD recorder will allow storage of up to 35 GBytes on a corresponding disc. Furthermore, two or even more layers can be used per side and these can be applied to both sides of the disc. Finally, it is possible to combine several discs in a special magazine.

This enormous amount of data requires new ways to organize the recordings, search for content and access specific recordings, because it is no longer possible to find recordings in a user's book shelf by just looking at the video cassettes/discs and some annotations on their cover. One possible solution for this is to use so-called metadata, defined as data about data, for the recorded content.

Metadata can be embedded within the multimedia content itself. For example, the MPEG-2 systems standard as specified in ISO/IEC 13818-1 defines program specific information (PSI) which is multiplexed with the audio and video streams. Similarly, the DVB standard used for the transmission of digital television signals specifies Service Information (DVB-SI) included in a DVB compliant MPEG-2 transport stream multiplex.

### Invention

The invention is based on the recognition of the following fact. Given the availability of metadata multiplexed into the multimedia content itself it is possible to access the metadata directly from the bitstream, like the DVB-SI information directly from the MPEG-2 transport stream. However, for recorded data like a broadcasted DVB television signal which is recorded on a disc after reception, a search based on these metadata would require a full search through all multimedia content stored in order to collect that metadata. This is both inefficient and time consuming.

Therefore, a problem to be solved by the invention is to make metadata information multiplexed into the multimedia content itself more easily available for automatic or electronic access, in particular for metadata based searches, browsing or presentation engines. This problem is solved by the method disclosed in claim 1. An apparatus that utilizes this method is disclosed in claim 8.

According to the invention the metadata are extracted from the multimedia content multiplex. The extracted metadata are gathered and analyzed to form metadata entities, which are amended by a reference to the content itself. A descriptor stream is formed from the resulting pairs of metadata entities and references to the content and is stored separately from the files comprising multimedia content.

In this way the metadata attached to the multimedia content allow efficient and fast automatic content referencing, content location and automatic or electronic access.

Advantageously, the invention can be used for accessing metadata addressing a file or parts of a file recorded on a storage medium. In this case, processing the metadata is performed during a recording process of the files comprising multimedia content. Especially, for data of a recorded MPEG-2 transport stream this allows to access the metadata without a need to reparse the entire stream.

The processing of the metadata can be performed during the recording process of the files or file parts. This has the advantage that the metadata are immediately available for metadata based searches.

However, it can also by advantageous to perform the processing of the metadata in an offline pass after the recording process, e.g. if an MPEG transport stream is recorded as it is without demultiplexing of the elementary streams.

Furthermore, it can be advantageous to complete the metadata extracted from the multimedia content multiplex by metadata retrieved from another source, e.g. by metadata transmitted by a service provider via internet.

Also the metadata extracted from the multimedia content multiplex can be supplemented by inputs from the user, e.g. using a keyboard. This allows the user to make personal annotations.

Further advantageous embodiments of the invention result from the following description.

### Drawing

Exemplary embodiments of the invention are described with reference to the accompanying drawing, which shows in:

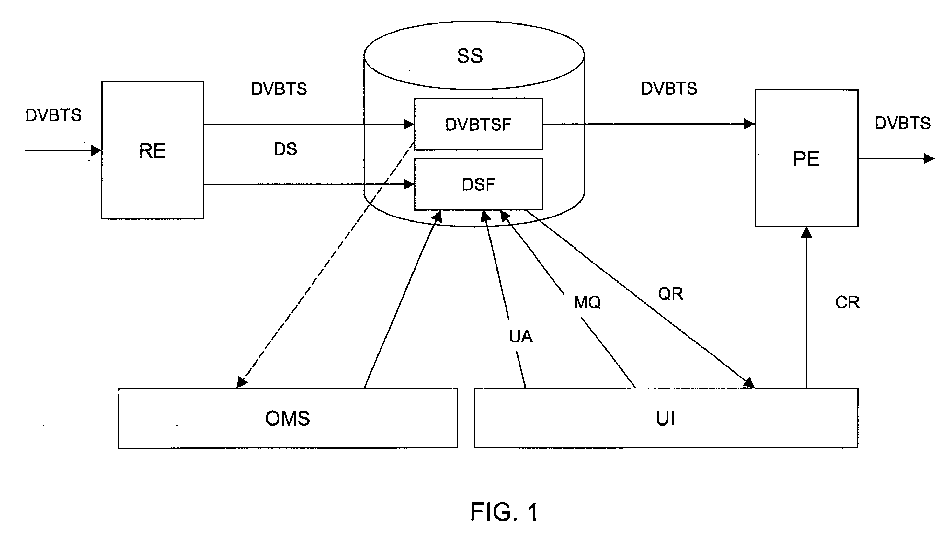

- Fig. 1: the processing of a separate descriptor stream comprising metadata.

### Exemplary embodiments

Exemplary embodiments of the invention are described in the following. Although the further description concentrates on the processing of an MPEG-2 transport stream, most embodiments can easily be generalised for use in any kind of multiplexed bitstreams comprising metadata.

In Fig. 1 a DVB compliant MPEG-2 transport stream DVBTS containing multimedia data and DVB-SI data represents the multimedia content multiplex. The multimedia data can comprise arbitrary data, but especially includes video and audio data. The DVB-SI data consists of metadata carrying Descriptors that are encapsulated into SI sections and SI tables and may stretch across multiple MPEG-2 transport packets, that are not necessarily consecutive inside the transport stream multiplex. For further details reference is made to the MPEG-2 systems standard ISO/IEC 13818-1.

The recording engine RE collects all the data bytes that belong to a given DVB-SI Descriptor from the MPEG-2 transport packets and it also memorizes a position reference inside the MPEG-2 transport stream where the DVB-SI Descriptor did become valid. Both the Descriptor data and the start position reference are stored. From time to time a Descriptor is collected that is meant as a replacement (update) for a Descriptor that has already been found in the same MPEG-2 transport stream before. This means that the previous descriptor becomes invalid. The recording engine then stores the end position reference alongside the already stored start position reference of the previous DVB-SI Descriptor. At the end of the MPEG-2 transport stream, the recording engine checks all stored DVB-SI Descriptors and stores an end position to every Descriptor that didn't become invalidated so far. The start position reference and end position reference as well as a reference to the stored MPEG-2 transport stream itself form a so-called Content Reference or a Content Locator. All pairs of Descriptor and Content Reference are arranged to form a Descriptor Stream DS, which is stored by the storage system SS separately from the MPEG-2 transport stream DVBTS. For this purpose arbitrary storage systems can be used, e.g. optical storage devices or hard disk drives. Usually, both the Descriptor Stream DS and the MPEG-2 transport stream DVBTS are stored in respective separate files DSF, DVBTSF on the same storage medium. However, for some applications it is also useful to store them on different storage media.

The Descriptor Stream can later be amended by any kind of Descriptor and Content Reference pairs. Other sources OMS than the MPEG-2 transport stream DVBTS can be used for retrieving the metadata. Especially, the metadata can be generated by automatic feature extraction, symbolized by the broken arrow in the figure, or, the metadata can be downloaded from the Internet. User annotations UA can be added as well, using the user interface UI, which may comprise a graphical display and some manual input means like a remote control or a keyboard or some speech input means. The user interface UI can also be used to launch a metadata query MQ, query MQ, e.g. for accessing a certain multimedia file or scene included in the stored DVB transport stream files.
The result of the metadata query, i.e. the corresponding Descriptor and Content Reference pairs, is given back to the user interface UI, especially, if the query results in more than one hit. For informing the user about the query result a corresponding display, e.g. showing a table of found files, or a speech output may be used. After the user chooses one among several found files, the Content Reference of the selected file is supplied to the playback engine PE for playback of the DVB transport stream comprising the requested file described by the Content Reference CR. However, if as a response to a query only a single file is found, the Content Reference CR and the respective DVB transport stream comprising the found file can also directly be supplied to the playback engine PE skipping the user selection process.

Instead of amending complete Descriptor and Content Reference pairs, it is also possible to update, modify or replace either a Descriptor or a Content Reference exclusively.

A Descriptor Stream may also be generated by a process completely independent from the recording engine described above. If the multimedia content does not carry embedded metadata, it would also be possible to store a Descriptor Stream in the same format, but the pairs of Descriptor and Content Reference are generated from out-of-band data (e.g. user annotations, internet downloads, feature extraction).

The Descriptors in the Descriptor Stream may also be stored in a different encoding. For instance it is beneficial to transcode DVB-SI Descriptors from their binary encoding into an XML encoding. Other transport or storage encodings may exist.

For some DVB-SI Descriptors (e.g. EPG data) it is important to know, from what table or context they have been extracted from. In such cases it is beneficial to store such context information together with the Descriptor, Content Reference pairs.

The invention includes the following advantages:

The separately stored Descriptor Stream allows for an easy and fast access to the metadata information by a metadata based search, browsing or presentation engine.

DVB-SI Descriptors become valid within the multimedia multiplex as soon as they are transmitted. They are either invalidated by the transmission of a Descriptor of the same Descriptor type but with different values, or, by the end of the transmission. Having a Descriptor Stream allows for the addition of validity information (start, end) that is more convenient to use.

Descriptors from different origins may come in different encodings. The storage of a separate Descriptor Stream offers a way to have a unified encoding for the Descriptors (e.g. XML).

Descriptors may have been generated by an offline process or transmitted as out of band data. A separate Descriptor Stream offers a possibility to store all these Descriptors together.

The invention is applicable to all kinds of electronic multimedia content referencing and content location, for instance in connection with DVR standardisation, metadata, Content Referencing, Content Location, Personal Video Recorder, Personal Digital Recorder, Optical Storage, Hard Disk Storage, Home Server, and Web Enabled Storage.

## Claims

1. Method for simplifying the access of metadata, which are associated with a file comprising multimedia data or a part of said file, especially for describing the content of said multimedia data and/or searching said file or file part among a plurality of files comprising multimedia data, wherein the metadata are originally multiplexed with said multimedia data, **characterized in**
extracting the metadata from the multimedia content multiplex (DVBTS);
gathering the extracted metadata;
analyzing the gathered metadata to form metadata entities;
amending the metadata entities by a reference to the content itself;
forming a descriptor stream (DS) from the resulting pairs of metadata entities and references to the content;
storing (SS) said descriptor stream (DSF) separately from the files comprising multimedia content.

2. Method according to claim 1, wherein the files or file parts comprising multimedia content are recorded on a storage medium (SS) and wherein the metadata are used for addressing said recorded files or file parts (DVBTSF).

3. Method according to claim 2, wherein the processing of the metadata is performed during the recording process of the files or file parts.

4. Method according to claim 2, wherein the processing of the metadata is performed in an offline pass after the recording process.

5. Method according to one of claims 1 to 4, wherein the metadata extracted from the multimedia content multiplex are completed by metadata retrieved from another source (OMS).

6. Method according to one of claims 1 to 4, wherein the metadata extracted from the multimedia content multiplex are supplemented by inputs from the user, e.g. using a keyboard (UI).

7. Method according to one of claims 1 to 6, wherein said multiplex of multimedia data and metadata corresponds to a DVB compliant MPEG-2 transport stream (DVBTS) and wherein the metadata multiplexed into the multimedia content corresponds to the DVB-SI information.

8. Apparatus for simplifying the access of metadata, which are associated with a file comprising multimedia data or a part of said file, especially for describing the content of said multimedia data and/or searching said file or file part among a plurality of files comprising multimedia data, wherein the metadata are multiplexed with said multimedia data, **characterized in**
means for extracting the metadata from the multimedia content multiplex;
means for gathering the extracted metadata;
means for analyzing and processing the gathered metadata to form metadata entities;
means for amending the metadata entities by a reference to the content itself;
means for forming a descriptor stream from the resulting pairs of metadata entities and references to the content;
means for storing said descriptor stream separately from the files comprising multimedia content.
